# EUROPEAN PATENT SPECIFICATION

(11) **EP 2 217 373 B1**
(45) Date of publication and mention of the grant of the patent: **06.03.2019**
(21) Application number: 07861758.6
(22) Date of filing: 09.11.2007
(51) Int. Cl.: B01J 27/049

(54) **PREPARATION OF BULK METALLIC GROUP VIII/GROUP VIB METAL CATALYSTS**
HERSTELLUNG VON METALLISCHEN GRUPPE-VIII- UND/ODER GRUPPE-VIB-METALL-VOLLKATALYSATOREN
PRÉPARATION DE CATALYSEURS MASSIQUES MÉTALLIQUES À BASE DE MÉTAUX DU GROUPE VIII/VIB

(43) Date of publication of application: 18.08.2010
(73) Proprietor: ExxonMobil Research and Engineering Company, Annandale, NJ 08801-0900 (US)
(72) Inventor: BAI, Chuansheng, Phillispburg NJ 08865 (US); BEECKMAN, Jean, Columbia MD 21044 (US); McCARTHY, Stephen, J., Center Valley PA 18034 (US); HOU, Zhigou, Nazareth PA 18064 (US); WU, Jason, Clinton NJ 08809 (US)
(74) Representative: ExxonMobil Chemical Europe Inc.
(86) International application number: PCT/US2007/023398
(87) International publication number: WO 2009/061295

(56) References cited:
- WO-A2-2008/045552
- US-A- 5 217 938
- US-A1- 2004 038 820
- US-A1- 2006 060 502
- US-B2- 6 642 173
- US-B2- 6 753 286

## Description

### FIELD OF THE INVENTION

This invention relates to methods for preparation of bulk metallic catalysts and corresponding catalyst precursors comprised of a Group VIII metal and a Group VIB metal.

### BACKGROUND OF THE INVENTION

Increasingly stringent environmental regulations will require significant reductions in the sulfur content of transportation fuels. For example, by the end of this decade, maximum sulfur levels for distillate fuel will be limited to 10 wppm in Europe and Japan and 15 wppm in North America. To meet these ultra-low sulfur requirements without expensive modifications to existing refineries, it will be necessary to design a new generation of catalyst that has very high activity for desulfurization, particularly for distillate fuels at low to medium pressure.

In one approach, a family of compounds, related to hydrotalcites, e.g., ammonium nickel molybdates, has been prepared. Whereas X-ray diffraction analysis has shown that hydrotalcites are composed of layered phases with positively charged sheets and exchangeable anions located in the galleries between the sheets, the related ammonium nickel molybdate phase has molybdate anions in interlayer galleries bonded to nickel oxyhydroxide sheets. See, for example, Levin, D., Soled, S. L., and Ying, J. Y., Crystal Structure of an Ammonium Nickel Molybdate prepared by Chemical Precipitation, Inorganic Chemistry, Vol. 35, No. 14, p. 4191-4197 (1996). The preparation of such materials also has been reported by Teichner and Astier, Appl. Catal. 72, 321-29 (1991); Ann. Chim. Fr. 12, 337-43 (1987), and C. R. Acad. Sci. 304 (II), #11, 563-6 (1987) and Mazzocchia, Solid State Ionics, 63-65 (1993) 731-35.

Another approach is disclosed in U.S. Patent No. 6,162,350; 6,652,738, 6,635,599 and 6,534,437, which relates to a family of bulk Group VIII/Group VIB trimetallic catalysts for the removal of sulfur from distillate fuels. The preferred trimetallic catalysts are comprised of Ni-Mo-W and are prepared from a variety of catalyst precursor compounds. WO 2008/045552 relates to bulk metallic catalysts comprised of a Group VIII metal and a Group VIB metal and methods for synthesizing bulk metallic catalysts. US 2006/0060502 relates to bulk bi-metallic catalysts for use in the hydroprocessing of hydrocarbon feeds. The catalysts are prepared from a catalyst precursor containing an organic agent.

While some of the above mentioned catalysts have met with varying degrees of success, there is still a need in the art for ever more active catalysts to produce transportation fuels have ultra-low levels of sulfur, particularly for low pressure hydrotreating, e.g. a hydrogen partial pressure of less than 500 psig (3.45 MPa) or less than 1000 psig (6.90 MPa).

### SUMMARY OF THE INVENTION

In an embodiment, a method for preparing a bulk bimetallic Group VIII/Group VIB catalyst precursor is provided. The method includes mixing at least one Group VIII metal reagent, at least one Group VIB metal reagent, and an organic complexing agent in the form of an organic salt for an effective amount of time so that no solids are present. The mixture is then heated at a pressure of less than 1 atmosphere under effective conditions to dry the mixture. The heated mixture is then calcined to form catalyst precursor. The mixing step and heating step are performed in a plow mixer or in a conical vacuum dryer.

### BRIEF DESCRIPTION OF DRAWINGS

Figure 1 provides X-ray Diffraction (XRD) patterns for a bulk CoMo catalyst precursor and a conventional CoMo catalyst, as described in Example 2
Figures 2a and 2b provide data related to a Temperature Programmed Oxidation (TPO) analysis of a catalyst precursor as described in Example 3.
Figures 3a and 3b provide data related to a Temperature Programmed Reduction (H₂-TPR) analysis of a catalyst precursor , as described in Example 4.
Figure 4 provides XRD patterns of a catalyst precursor and sulfided catalyst, as described in Example 5.
Figure 5 provides a TEM of a sulfided catalyst, as described in Example 6.
Figures 6a and 6b provide TEM images of sulfided catalysts, as described in Example 6.
Figure 7 provides data related to a TPO study of a sulfided catalyst, as described in Example 7.
Figure 8 schematically shows an apparatus for forming catalyst precursor by spray drying.
Figure 9 schematically shows an apparatus for forming catalyst precursor by flash decomposition.
Figure 10 schematically shows an apparatus for forming catalyst precursor using a plow mixer.
Figure 11 schematically shows an apparatus for forming catalyst precursor using a conical vacuum dryer.
Figure 12 schematically shows an apparatus for forming catalyst precursor using a rotary calciner.

### DETAILED DESCRIPTON OF THE INVENTION

The catalysts of the present invention are different than conventional catalysts typically used for hydroprocessing, such as hydrodesulfurization (HDS). The conventional method for improving HDS activity of a catalyst involving a Group VIB and a Group VIII metal, such as a CoMo catalyst, is to deposit the Group VIB and Group VIII active components on an alumina support. This can increase the dispersion of the active components and generate additional HDS activity. By contrast, the catalysts according to the invention are bulk catalysts formed by heating a catalyst precursor comprised of about 40 wt.% to about 90 wt.% of a Group VIII metal and a Group VIB metal, based on the total weight of the bulk catalyst particles. The weight of metal is measured as metal oxide. The balance of the catalyst precursor weight is an organic compound-based material. In an embodiment, the Group VIB metal is Mo or W. In another embodiment, the Group VIII metal is Co or Ni. In still another embodiment, the Group VIB metal is Mo and the Group VIII metal is Co. In yet another embodiment, the Group VIII metal is a non-noble metal.

Based on X-ray diffraction, it appears that the Group VIII metals and the Group VIB metals in the catalyst precursor after heating do not have the long range ordering typically found in materials that are primarily a crystalline oxide. Instead, in some embodiments it appears that the metals are complexed by the organic complexing agent in the catalyst precursor. The metals are complexed by the organic complexing agent when the metals and complexing agent are mixed together. The nature of the complex may change after one or more heating steps, as the organic complexing agent may undergo one or more conversions or reactions to form an organic compound-based component. In an alternative embodiment, the catalyst precursor can have some crystalline or nanocrystalline characteristics (based on XRD) in addition to having characteristics of metals that are complexed by the organic complexing agent.

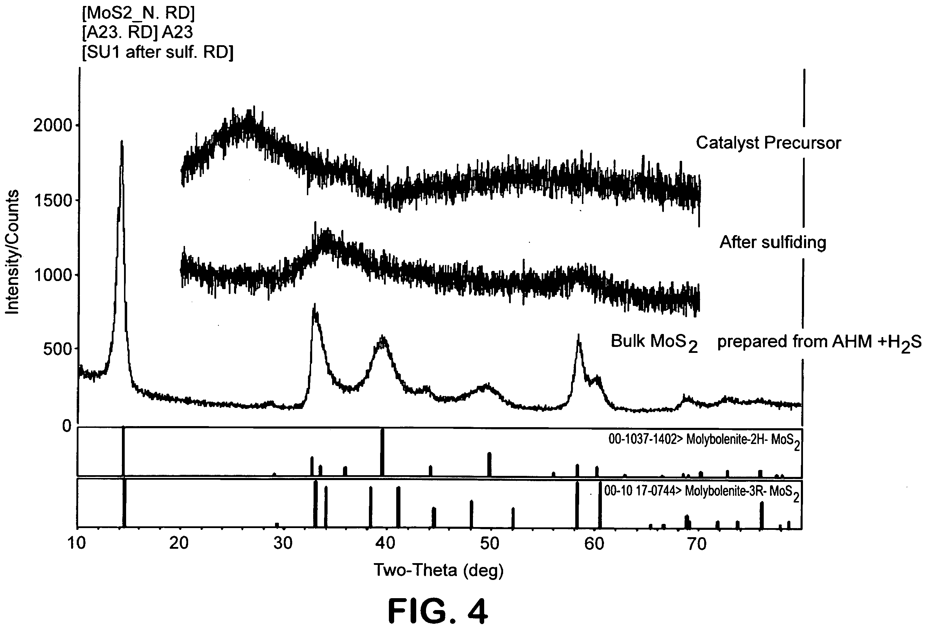

The X-ray Diffraction data provided in Figure 4 of this application was generated under the following conditions. X-ray powder diffraction analyses of the samples were obtained using a PANalytical X-pert PRO MPD, manufactured by PANalytical, Inc., and equipped with a X-Cellerator detector. The 2 theta scan used a Cu target at 45 kV and 40 mA. The diffraction patterns were taken in the range of 20° to 70° and 20° to 70° 2θ. The step size was 0.2 degrees and the time/step was 480 seconds. The remaining X-ray Diffraction data and patterns provided in this application were generated under the following conditions. X-ray powder diffraction analyses of the samples were obtained using a Bruker D4 Endeavor, manufactured by Bruker AXS and equipped with a Vantec-1 high-speed detector. The 2 theta scan used a Cu target at 35 kV and 45 mA. The diffraction patterns were taken in the range of 2° to 70° 2θ. The step size was 0.01794 degrees and the time/step was 0.1 second.

In this application, an "amorphous" catalyst or catalyst precursor refers to a catalyst or catalyst precursor that lacks the long range order or periodicity to have peaks in X-ray diffraction spectra that can be sufficiently distinguished from the background noise in the spectra, such as by determining a ratio of peak intensity versus background noise. Nanocrystalline catalyst or catalyst precursor refers to catalyst or catalyst precursor that has some crystallinity but with a grain size of less than 100 nm. This determination is made using X-ray diffraction spectra generated according to the conditions described above. Broadening of X-ray spectra occurs increasingly as particle sizes shrink, such as when grain sizes are < 100 nm, resulting in an XRD pattern with broadened or apparently non-existent peaks. It is also possible that amorphous or nanocrystalline phases can include crystalline phases with grain sizes of > 100 nm that are resolvable in the XRD. Without being bound by any particular theory, it is believed that the high activity of the catalyst systems according to various embodiments of the invention results from an amorphous and/or nanocrystalline component.

In an embodiment, the bulk catalyst particles, formed by sulfidation of catalyst precursor particles prepared by a method according to the invention, can have a characteristic X-ray diffraction pattern of an amorphous material. Generally, it is believed that the long range ordering typically found in crystalline phases of Group VIII and Group VIB metal oxides and/or sulfides are not present in bulk catalysts formed according to the invention. In particular, XRD spectra of catalysts and catalyst precursors according to the invention either do not show crystalline phases of CoMo oxides, or alternatively only weakly show the crystalline CoMo oxide character. Without being bound by any particular theory, it is believed that the organic complexing agent and/or the resulting organic compound-based component interrupts or inhibits crystallization of oxides of the Group VIB and Group VIII metals. Instead of forming crystalline oxides with long range ordering, it is believed that at least a portion of the bulk catalyst particles have a structure that continues to involve some sort of complex with an organic compound-based component. This structure may be amorphous and/or crystalline on a length scale that is not readily resolved by XRD. The nature of the complexation may differ from the complexation present in the catalyst precursor. Additionally, at least a portion of the metals present in the catalyst can be in the form of metal sulfides, as opposed to complexed metals or amorphous/small crystal metal oxides.

The bulk catalyst precursor compositions , obtained by mixing of metal reagents with an organic complexing agent and then heating and/or mixing, have a relatively low surface area (measured by Brunauer-Ernett-Teller
method, or BET) of about 16 m²/g or less. In another embodiment, the bulk catalyst precursor compositions have a surface area (measured by BET) of less than about 10.0 m²/g, or less than about 9.0 m²/g, or less than about 7.5 m²/g, or less than about 5.0 m²/g, or less than about 4.0 m²/g, or less than about 3.0 m²/g, or less than about 2.5 m²/g. In still another embodiment, the bulk catalyst precursor compositions have a surface area of at least about 0.05 m²/g, or at least about 0.1 m²/g, or at least about 0.25 m²/g. In a preferred embodiment, the bulk catalyst precursor compositions have a surface area of from about 0.1 m²/g to about 10.0 m²/g.

The molar ratio of Group VIII metal to Group VIB metal ranges generally from about 1 to 10 to about 10 to 1. Expressed as a fractional value, the molar ratio is generally from about 0.1 to about 10. Preferably, the ratio of Group VIII metal to Group VIB metal is less than about 3, and more preferably less than about 2. Preferably, the ratio of Group VIII metal to Group VIB metal is greater than about 0.33, and more preferably greater than about 0.5.

The catalyst compositions can also contain any additional component that is conventionally present in hydroprocessing catalysts such as an acidic component, e.g. phosphorus or boron compounds, additional transition metals, rare earth metals, main group metals such as Si or Al, or mixtures thereof. Suitable additional transition metals are, e.g. rhenium, ruthenium, rhodium, iridium, chromium, vanadium, iron, platinum, palladium, cobalt, nickel molybdenum, zinc, niobium, or tungsten. All these metals are generally present in the sulfided form if the catalyst composition has been sulfided. Prior to sulfidation, at least a portion of one or more metals can be complexed by the organic compound-based material in the catalyst precursor. After sulfidation, it is believed that at least a portion of the sulfided metals are still somehow directly or indirectly bound to the organic compound-based material (e.g., carbon) in the catalyst.

The bulk metallic catalysts are prepared by the controlled heating of Group VIII and Group VIB precursor compounds that are complexed with an organic complexing agent in the form of an organic acid. Preferably, the organic complexing agent is a metal binding group or chelating agent. Preferably, the organic complexing agent is a bidentate ligand. Preferably, the organic complexing agent is suitable for forming metal-ligand complexes in solution.

In an embodiment where the catalyst precursor is formed from a solution containing the Group VIII metal, Group VIB metal, and organic complexing agent, it is preferred that both the Group VIII compound and the Group VIB compound be water soluble salts in the appropriate predetermined concentration to yield the desired molar ratios as mentioned above. The more preferred Group VIII metals are Co and Ni, with Co being the most preferred. Preferably, the Group VIII metals are non-noble metals. The more preferred Group VIB metals are Mo and W, with Mo being the most preferred. Non-limiting examples of suitable Co precursor compounds include carbonates, nitrates, sulfates, acetates, chlorides, hydroxides, propionates, glycinates, hydroxycarbonates, acetyl acetates, acetyl acetonates, metallic Co(0), Co oxides, Co hydrated oxides, Co carboxylates (in particular Co glyoxylate), Co citrate, Co gluconate, Co tartrate, Co glycine, Co lactate, Co naphthenate, Co oxalate, Co formate, and mixtures thereof, including ammonium or amine forms of the above. Preferred molybdenum and tungsten precursor compounds include alkali metal or ammonium molybdate (also peroxo-, di-, tri-, tetra-, hepta-, octa-, or tetradecamolybdate), molybdic acid, phosphomolybdic acid, phosphotungstic acid, Mo-P heteropolyanion compounds, W-Si heteropolyanion compounds, Co-Mo-W heteropolyanion compounds, alkali metal or ammonium tungstates (also meta-, para-, hexa-, or polytungstate), acetyl acetonates, and mixtures thereof. In still other embodiments, any suitable Group VIII or Group VIB metal reagent can be used to prepare Group VIII or Group VIB metal solutions.

Organic acids are used as the organic complexing agent. Non-limiting examples of organic complexing agents suitable for use herein include pyruvic acid, levulinic acid, 2-ketogulonic acid, keto-gluconic acid, thioglycolic acid, 4-acetylbutyric acid, 1,3-acetonedicarboxylic acid, 3-oxo propanoic acid, 4-oxo butanoic acid, 2,3-diformyl succinic acid, 5-oxo pentanoic acid, 4-oxo pentanoic acid, ethyl glyoxylate, glycolic acid, glucose, glycine, oxamic acid, glyoxylic acid 2-oxime, ethylenediaminetetraacetic acid, nitrilotriacetic acid, N-methylaminodiacetic acid, iminodiacetic acid, diglycolic acid, malic acid, gluconic acid, acetylacetone, and citric acid. Preferred organic acids are glyoxylic acid, oxalacetic acid, 2-ketogulonic acid, alpha-ketoglutaric acid, 2-ketobutyric acid, pyruvic acid, keto-gluconic acid, thioglycolic acid, and glycolic acid. Most preferred are glyoxylic acid and oxalacetic acid.

In another embodiment, the organic complexing agent is an organic acid that contains a -COOH functional group and at least one additional functional group selected from carboxylic acid -COOH, hydroximate acid -NOH-C=O, hydroxo -OH, keto -C=O, amine -NH2, amide: -CO-NH2, imine : -CNOH, epoxy: =COC=, or thiol: -SH. Preferably, the organic complexing agent is a bidentate ligand.

The process for preparing the catalysts of the present invention comprises multiple steps. The first step is a mixing step wherein at least one Group VIII metal reagent, at least one Group VIB metal reagent, and at least one organic complexing agent are combined together. In an embodiment, one or more of the metal reagents and organic complexing agent can be provided in the form of solutions, such as aqueous solutions. In another embodiment, one or more of the metal reagents and organic complexing agent can be provided in the form of slurries. In still another embodiment, one or more of the metal reagents and organic complexing agent can be provided in the form of a solid material. Those of skill in the art will recognize that still other forms of providing the organic complexing agent and metal reagent are possible, and that any suitable form (solution, slurry, solid, etc.) can be used for each individual reagent and/or organic complexing agent in a given synthesis. In this invention, the term "mixture" is defined to include solutions, slurries, and/or any other type of mixture suitable for use in forming a catalyst precursor according to the invention.

The metal reagents and organic complexing agent are mixed together to form a precursor mixture. In an embodiment where one or more of the metal reagents or organic complexing agent are provided as a solution or slurry, mixing can involve adding the metal reagents and organic complexing agent to a single vessel. If one or more of the metal reagents and organic complexing agent are provided as solids, mixing can include heating the organic complexing agent to a sufficient temperature to melt the complexing agent. This will allow the organic complexing agent to solvate any solid metal reagents.

The temperature during mixing is preferably from ambient temperature to the boiling point of the solvent. The preparation can be performed in any suitable way. For example, in embodiments involving solutions and/or slurries, separate solutions (or slurries) can be prepared from each of the catalytic components. That is, a Group VIII metal compound in a suitable solvent and a Group VIB metal in a suitable solvent can be formed. Non-limiting examples of suitable solvents include water and the C₁ to C₃ alcohols. Other suitable solvents can include polar solvents such as alcohols, ethers, and amines. Water is a preferred solvent. It is also preferred that the Group VIII metal compound and the Group VIB compound be water soluble and that a solution of each be formed, or a single solution containing both metals be formed. The organic complexing agent can be prepared in a suitable solvent, preferably water. The three solvent components can be mixed in any sequence. That is, all three can be blended together at the same time, or they can be sequentially mixed in any order. In an embodiment, it is preferred to first mix the two metal components in an aqueous media, than add the organic complexing agent.

The process conditions during the mixing step are generally not critical. It is, e.g., possible to add all components at ambient temperature at their natural pH (if a suspension or solution is utilized). It is generally preferred to keep the temperature below the boiling point of water, i.e., 100°C to ensure easy handling of the components during the mixing step. However, if desired, temperatures above the boiling point of water or different pH values can be used The organic complexing agent is an acid having a conjugate base. The pH of the mixture can be adjusted to drive the acid/base equilibrium toward a desired form. For example, the pH of the solution can be raised to drive the equilibrium toward formation of more of the conjugate base of the acid used as organic complexing agent. If the reaction during the mixing step is carried out at increased temperatures, the suspensions and solutions that are added during the mixing step are preferably preheated to an increased temperature which can be substantially equal to the reaction temperature.

The amount of metal precursors and organic complexing agent in the mixing step should be selected to achieve preferred ratios of metal to organic compound-based material in the catalyst precursor after heating. These preferred ratios result in highly active bulk catalysts. For example, the ratio of organic acid to total metal in the mixed solution should reach a minimum level that results in a highly active catalyst.

In an embodiment, the amount of organic complexing agent used in the mixed solution should be enough to provide at least about 10 wt% of organic compound-based material in the catalyst precursor formed after heating, or at least about 20 wt%, or at least about 25 wt%, or at least about 30 wt%. In another embodiment, the amount of organic complexing agent used in the mixed solution should provide less than about 60 wt% of organic compound-based material in the catalyst precursor formed after heating, or less than about 40 wt%, or less than about 35 wt%, or less than about 30 wt%. Preferably, the amount of organic complexing agent used in the mixed solution is enough to provide between about 20 wt% and about 35 wt% of organic compound-based material in the resulting catalyst precursor. A desired amount of organic compound-based material in the catalyst precursor can be achieved based on the amount of organic complexing agent to metal ratio in the mixed solution and based on the thermal activation conditions used to form the catalyst precursor. The term "organic compound-based material" refers to the carbon containing compound present in either the catalyst precursor after heating, or in the catalyst after sulfidation. The organic compound-based material is derived from the organic complexing agent, but may be modified due to heating of the catalyst precursor and/or sulfidation of the precursor to form the catalyst. Note that the eventual form of the organic compound-based material may include carbon not traditionally considered as "organic", such as graphitic or amorphous carbon. The term organic compound-based material used here specifies only that the carbon was derived originally from the organic complexing agent and/or another organic carbon source used in forming the catalyst precursor.

For this invention, the weight percentage of organic compound-based material in the catalyst precursor was determined by performing a Temperature Programmed Oxidation on the catalyst precursor under the following conditions. Temperature Programmed Oxidation using TGA/MS was performed on dried and heated samples. The TGA/MS data was collected on a Mettler TGA 851 thermal balance which was interfaced with a quadrupole mass spectrometer equipped with a secondary electron multiplier. Between 20 and 25 mg of sample was heated at 4°C /min from ambient temperature to 700°C in flowing 14.3% O₂ in He (77cc/min) at one atmosphere total pressure. In the TGA/MS experiments, the effluent gas was carried over to the MS instrument via a capillary line and specific m/e fragments such as 18 (H₂O), 44 (CO₂), 64 (SO₂) were analyzed as markers for the decomposition products and qualitative correlation with gravimetric / heat effects.

The weight percentage of material lost during a TPO procedure represents the weight percentage of organic compound-based material. The remaining material in the catalyst precursor is considered to be metal in the form of some type of oxide. For clarity, the weight percent of metal present in the catalyst precursor is expressed as metal oxide in the typical oxide stoichiometry. For example, weights for cobalt and molybdenum are calculated as CoO and MoO₃, respectively.

A similar calculation can be performed to determine the weight percentage of organic compound-based component in the catalyst formed after sulfidation. Once again, the weight percent of organic compound-based component is determined by TPO, according to the method described above. The remaining weight in the catalyst corresponds to metal in some form, such as oxide, oxysulfide, or sulfide.

The amount of organic complexing agent used in the mixed solution should also be enough to form metal-organic complexes in the solution under reaction conditions. The ratio of carboxylic acid groups of the organic acids used as complexing agent to metals can be at least about 1 (meaning that about the same number of carboxylic acid groups and metal atoms are present), or at least about 2, or at least about 3. In another embodiment, the ratio of carboxylic acid groups to metals can be 12 or less, or 10 or less, or 8 or less.

In another embodiment, the molar ratio used in the mixing solution of organic complexing agent to metals is about 6.0 or less, or about 5.5 or less, or about 5.0 or less, or about 4.8 or less, or about 4.6 or less. In another embodiment, the molar ratio used in the mixing solution of organic complexing agent to metals is about 1.5 or more, or about 2 or more, or about 2.5 or more, or about 3.0 or more, or about 3.5 or more.

In a preferred embodiment, the molar ratio of the Group VIII metal to the Group VIB metal is at least about 0.1, or at least about 0.2, or at least about 0.33, or at least about 0.5. In another preferred embodiment, the molar ratio of the Group VIII metal to the Group VIB metal is about 0.9 or less, or about 0.6 or less.

In the next step, the solution, slurry, or mixture is heated, dried, and formed into a catalyst precursor.

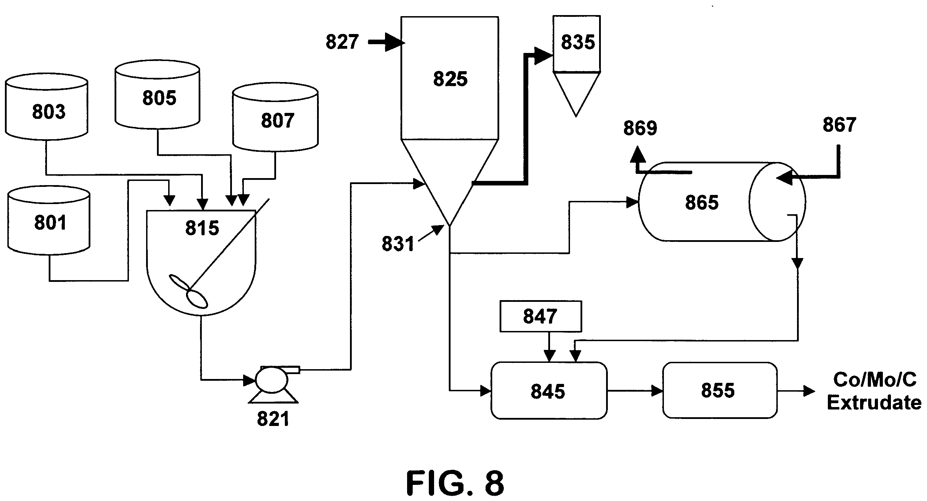

Figure 8 schematically shows for technical background purposes an apparatus suitable for forming catalyst precursor via spray drying. In the embodiment shown in Figure 8, synthesis of catalyst precursor begins by providing a Mo reagent solution 801, a Co reagent solution 803, and a solution of organic complexing agent 805. Optionally, a solution containing a binder 807 can also be provided. These solutions feed a mixing vessel 815, where the solutions can be mixed and aged to allow complexes to form between the metals and the organic complexing agent. After the solution is sufficiently mixed and/or aged, the solution can be pumped 821 to a drying chamber 825. In addition to the solution containing the catalyst precursor materials, the drying chamber is also provided with gas flow of hot air or inert gas 827. The drying chamber produces a powder output 831 corresponding to the catalyst precursor, and an output gas stream 833. The output gas stream 833 is directed to one or more secondary cyclones 835 for recovery of any additional
catalyst precursor entrained in the excess gas. This additional material can be added to the catalyst precursor exiting the spray dryer chamber. Alternatively, depending on the residence time of the droplets of solution within the drying chamber 825, the majority of the catalyst precursor may form and/or be separated from the excess in one of the secondary cyclones 835.

After exiting the spray dryer, if the catalyst precursor is dried to a sufficient or desired level, the catalyst precursor can be passed to a mulling operation 845. Additional materials such as an optional binder 847 can be added to the precursor at this point. The mulled catalyst precursor is then extruded 855, resulting in catalyst precursor that is ready for conversion into catalyst by sulfidation. Alternatively, after the catalyst precursor exits the spray dryer, the catalyst precursor can be directed to a calcination apparatus such as a rotary calciner 865 for further heat treatment. In addition to the catalyst precursor, the rotary calciner is also provided with a sweep gas feed of a suitable gas such as N₂ or air. The sweep gas aids in the removal of volatile compounds, such as excess moisture and evaporated and decomposed organics. In an embodiment, the sweep gas is counter-current to the powder, entering at the end of the calciner 865 at inlet 867, and being removed from rotary calciner 865 at outlet 869. Alternatively, the sweep gas may enter the calciner at 869 and exit at 867, which is co-current with the powder. The catalyst precursor powder leaving the rotary calciner 865 can then be passed to mulling operation 845 for mulling and extrusion as described above.

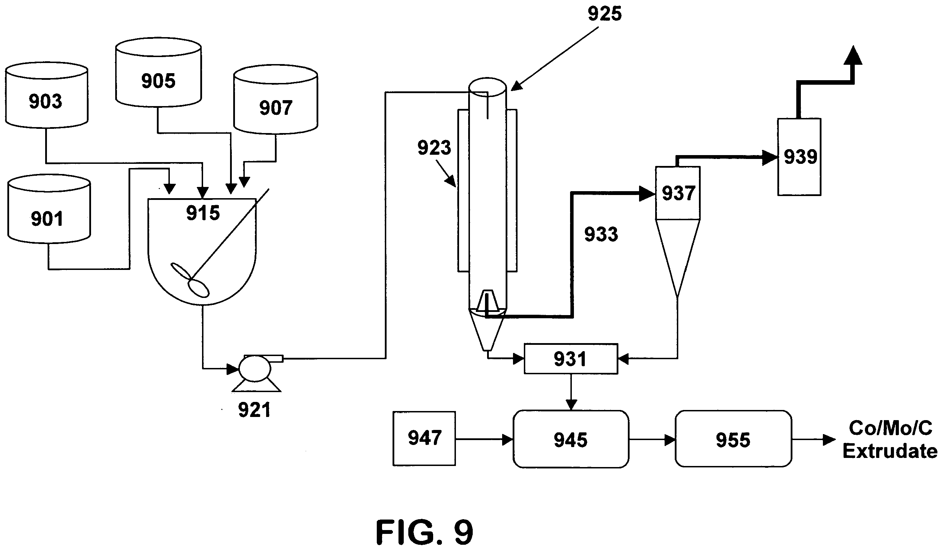

Also for technical background purposes, Figure 9 depicts an example of a flash decomposition apparatus generally suitable for preparing catalyst precursor. Synthesis of catalyst precursor begins by providing a Group VI metal reagent solution 901, a Group VIII metal compound or reagent solution 903, and a solution of organic complexing agent 905. Optionally, a solution containing a binder 907 can also be provided. These solutions feed a mixing vessel 915, where the solutions can be mixed and aged to allow complexes to form between the metals and the organic complexing agent. After the solution is sufficiently mixed and/or aged, the solution can be pumped 921 to a flash decomposition tube 925. The flash decomposition tube 925 includes an external heating source, such as an external heater 923. Optionally, air and fuel can also be provided to the interior of the flash decomposition tube to provide sources of controlled combustion, which provide sufficient heat to dry and/or partially decompose the solution. The flash decomposition tube produces a powder output 931, as well as an excess hot gas stream 933. The excess gas stream 933 is directed to a cyclone or other separator 937 for recovery of any additional material entrained in the excess hot gas. The high density (solid) output from cyclone 937 can be directed into mulling operation 945. The low density (primarily gas) output 943 from cyclone 937 can be passed through a bag filter or other separator 939 for further particle removal prior to exhausting the excess gas.

After exiting the flash decomposition tube, the catalyst precursor can be passed to a mulling operation 945. Additional materials such as an optional binder 947 can be added to the precursor at this point. The mulled catalyst precursor can then be extruded 955 to produce a catalyst precursor that is ready for conversion into catalyst by sulfidation.

In an embodiment according to the invention, a plow mixer can be used in a batch process for making catalyst precursor. In this process, the mixing vessel for forming the solution, slurry, or mixture of the Group VI metal compound, Group VIII metal compound, and the organic complexing agent is the chamber of a horizontal plow mixer. The Group VI and Group VIII metal compounds and the organic chelating agent are directly charged to a horizontal plow mixer and mixed until the solids are completely dissolved. The mixing is accomplished using one or more mixing paddles (the "plow") within the chamber of the mixer. Once the solids are completely dissolved, a vacuum is applied to the mixer and then the walls of the horizontal plow mixer are heated up to at least about 250°F (121°C), or at least about 300°F (149°C), or at least about 350°F (177°C), to dry the solution. Preferably, stirring with the mixing paddles is continued during this drying procedure. After a sufficient period of time, such as 2 to 3 hours, a dried CoMo-C powder is formed. The dried powder is then calcined at a higher temperature, such as at least about 550°F (288°C), or at least about 600°F (316°C), or at least about 650°F (343°C) in a second horizontal plow mixer or rotary calciner to form the high activity bulk CoMo-C catalyst. Preferably, the calcination temperature is less than about 750°F (399°C), or less than about 700°F (371°C).

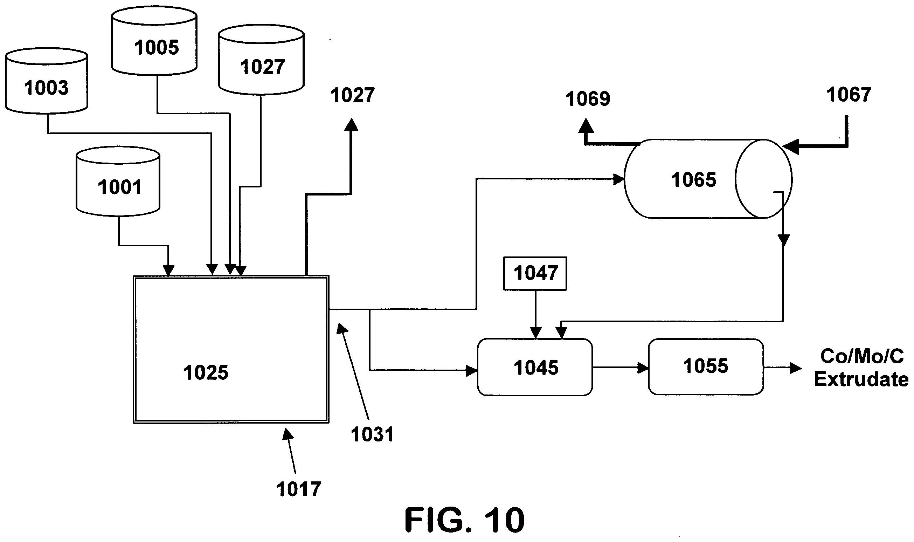

Figure 10 schematically shows an apparatus suitable for forming catalyst precursor that includes a plow mixer. In Figure 10, inlets 1002, 1004, and 1006 allow for introduction of various solutions, slurries, solids, and/or other mixtures into plow mixer 1025. In alternative embodiments, the number of inlets may vary so that, for example, all reagents are introduced through a single inlet, or so that multiple inlets can be used for one reagent. The solutions, slurries, solids, and/or other mixtures are mixed using paddles (not shown). After the solution is sufficiently mixed and/or aged, the solution can be dried in the same vessel by applying a vacuum to the vessel to remove the solvent. Heat is provided through a hot liquid circulating in the jacketed wall 1017 of the plow mixer. The temperature of the solution inside the plow mixer can be controlled by adjusting the temperature of the circulating liquid. The vapors are removed through the vacuum line 1027 and may be condensed if desired to recover the solvent. A dry air or dry inert gas, either cold or hot, may be supplied to the plow mixer to facilitate the drying process. A free-flowing powder 1031 corresponding to the catalyst precursor may be obtained as the output product from the mixer.

After exiting the plow mixer, if the catalyst precursor is dried to a sufficient or desired level, the catalyst precursor can be passed to a mulling operation 1045. Additional materials such as an optional binder 1047 can be added to the precursor at this point. The mulled catalyst precursor is then extruded 1055, resulting in catalyst precursor that is ready for conversion into catalyst by sulfidation. Alternatively, after the catalyst precursor exits the plow mixer, the catalyst precursor can be directed to a calcination apparatus such as a rotary calciner 1065 for further heat treatment. In addition to the catalyst precursor, the rotary calciner can also be provided with a sweep gas feed 1067 of a suitable gas such as N₂ or air. The sweep gas aids in the removal of volatile compounds, such as excess moisture and evaporated and decomposed organics. As shown in Figure 10, the sweep gas is counter-current to the powder, entering at the end of the calciner 1065 at inlet 1067, and being removed from rotary calciner 1065 at outlet 1069. Alternatively, the sweep gas may enter the calciner at 1069 and exit at 1067, which is co-current with the powder. The catalyst precursor powder leaving the rotary calciner 1065 can then be passed to mulling operation 1045 for mulling and extrusion as described above.

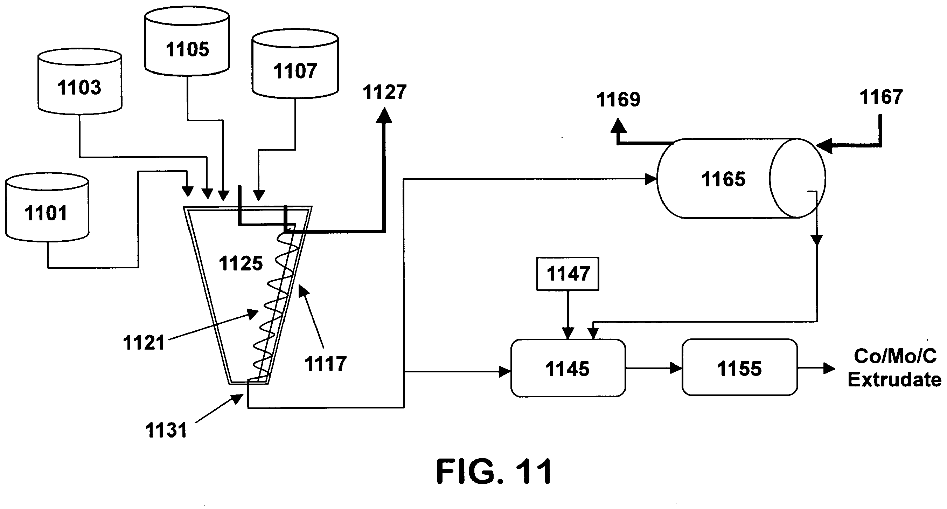

An alternative process according to the invention that operates under principles similar to a plow mixer is conical vacuum dryer, such as a Vrieco-Nauta dryer. Figure 11 schematically shows an apparatus including a conical vacuum dryer that is suitable
for forming catalyst precursor according to the invention. In the embodiment shown in Figure 11, synthesis of catalyst precursor begins by providing a Group VI metal compound or reagent solution 1101, a Group VIII metal compound or reagent solution 1103, and a solution of organic complexing agent 1105. Optionally, a solution containing a binder 1107 can also be provided. These solutions are fed to a conical vacuum dryer vessel 1125, where the solutions can be mixed and aged to allow complexes to form between the metals and the organic complexing agent. After the solution is sufficiently mixed and/or aged, the solution can be dried in the same vessel by applying a vacuum to the vessel to remove the solvent. Heat is provided through a hot liquid circulating in the jacketed wall 1117 of the conical vacuum dryer. The temperature of the solution inside the dryer can be controlled by adjusting the temperature of the circulating liquid. A rotating screw 1121 orbits along the vessel wall to provide heat exchange between the wall and the solution, and to help the solvent vapors to escape to the surface. The vapors are removed through the vacuum line 1127 and may be condensed if desired to recover the solvent. A dry air or dry inert gas, either cold or hot, may be supplied to the conical vacuum dryer to facilitate the drying process. A free-flowing powder 1131 corresponding to the catalyst precursor may be obtained as the output product from the dryer.

After exiting the conical vacuum dryer, if the catalyst precursor is dried to a sufficient or desired level, the catalyst precursor can be passed to a mulling operation 1145. Additional materials such as an optional binder 1147 can be added to the precursor at this point. The mulled catalyst precursor is then extruded 1155, resulting in catalyst precursor that is ready for conversion into catalyst by sulfidation. Alternatively, after the catalyst precursor exits the vacuum dryer, the catalyst precursor can be directed to a calcination apparatus such as a rotary calciner 1165 for further heat treatment. In addition to the catalyst precursor, the rotary calciner can also be provided with a sweep gas feed 1167 of a suitable gas such as N₂ or air. The sweep gas aids in the removal of volatile compounds, such as excess moisture and evaporated and decomposed organics. As shown in Figure 11, the sweep gas is counter-current to the powder, entering at the end of the calciner 1165 at inlet 1167, and being removed from rotary calciner 1165 at outlet 1169. Alternatively, the sweep gas may enter the calciner at 1169 and exit at 1167, which is co-current with the powder. The catalyst precursor powder leaving the rotary calciner 1165 can then be passed to mulling operation 1145 for mulling and extrusion as described above.

A rotary calciner can be used to dry and calcine a catalyst precursor in a single, continuous step. In such an embodiment, a heat source is used to heat the walls of the rotatable tube, providing indirect heating for the interior of the tube. The rotatable tube contains a bed of small non-porous spheres, such as glass or non-porous silica spheres or beads. The spheres provide increased surface area for formation of the catalyst precursor. The tube is tilted at an angle, so that as the tube rotates, the spheres, solution, and/or catalyst precursor will travel toward the exit of the drum. The residence time of the solution within the rotating tube can be modified by adjusting the tilt angle of the tube. The spheres exiting the tube are replaced by a flow of beads that enters the tube at the beginning of the tube.

During operation, the solution containing the Group VI metal compound, Group VIII metal compound, and the complexing agent is introduced into the rotatable tube of the calciner. The rotatable tube is rotated and heated, which causes the solution to be mixed with and contact the non-porous spheres under heat. The more volatile portions of the solution evaporate as the solution travels through the calciner, resulting in formation of catalyst precursor. The catalyst precursor forms on the available surfaces, which include the surfaces of the non-porous spheres and the walls of the rotatable tube. The catalyst precursor which forms on the non-porous spheres will continue to travel along the length of the calciner as the calciner rotates, due to the angle of inclination of the rotatable tube. For the catalyst precursor that forms on the walls of the tube, a chain or other
object can be included inside the rotatable tube to prevent the catalyst precursor from adhering to the walls.

After traveling through the length of the tube, the catalyst precursor and the non-porous spheres exit the tube and pass through a sizer. In an embodiment, the sizer is a series of screens with openings of decreasing size. Some or all of the screens within the sizer are also agitated. As the catalyst precursor and non-porous spheres pass through the sizer, the agitation causes any catalyst precursor adhering to a sphere to be knocked off. Due to the small size of the catalyst precursor particles, the catalyst precursor passes through the screens in the sizer to a collection vessel. The spheres are prevented from traveling to the collection vessel by the screens. Instead, the spheres are recirculated back to the front or entrance of the rotatable tube of the calciner.

For formation of catalyst precursor according to the invention, the temperature inside the calciner is preferably at least about 250°C, or at least about 300°C. The temperature in the rotary calciner can be less than 425°C, or less than about 400°C. Preferably, the temperature within the rotary calciner can be staged, so that the mixture and/or catalyst precursor are exposed to different temperatures as the mixture and/or catalyst precursor travels through the rotatable tube. For example, the rotary calciner can include three separate heating stages, with a first stage set at a temperature of 120°C, the second stage set at a temperature of 250°C, and the third stage set at a temperature of 400°C. The atmosphere within the calciner can be an inert gas such as nitrogen, but other gases such as air can also be used. The residence time within the calciner is preferably from about 10 minutes to about 2 hours.

The residence time within the rotatable tube can be controlled in various ways. In addition to adjusting the tilt of the rotatable tube, the interior of the tube can include walls on the surface of the tube, such as flights or a rotating spiral shaped wall. Walls on the interior surface of the tube can be used to either provide discreet stages within the tube, or to provide more uniform transport times
for spheres and catalyst precursor in the tube. A dam could also be created at the end of the tube to dictate the height of the bed of non-porous spheres within the tube.

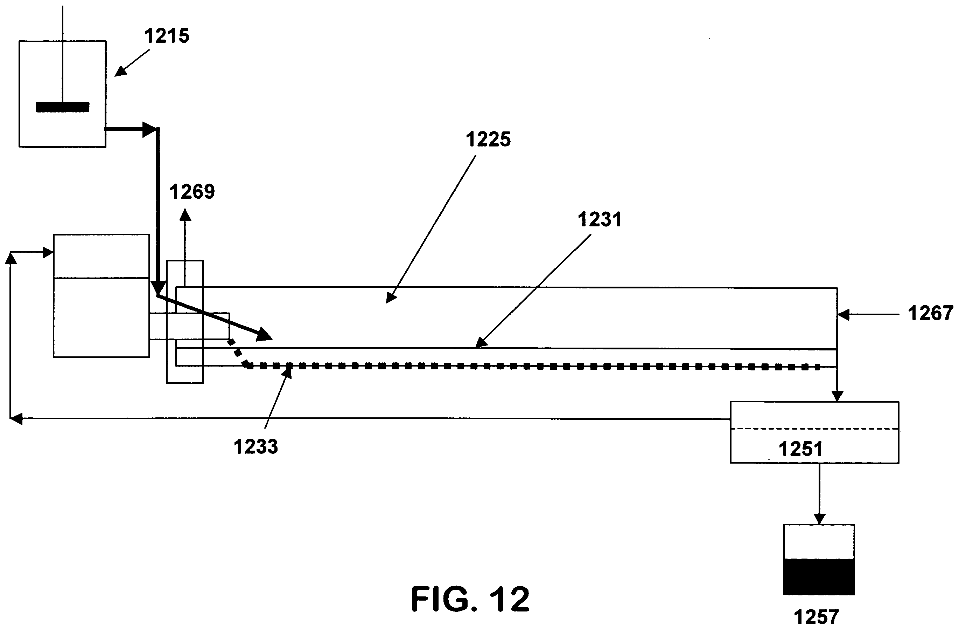

Figure 12 schematically shows a rotary calciner suitable for forming catalyst precursor. In Figure 12, the desired Group VI metal reagent, Group VIII metal reagent, and organic complexing agent are combined in a mixing vessel 1215. The mixture is delivered to rotary calciner 1225. Rotary calciner 1225 also includes a bed of non-porous particles or spheres 1231. As the tube of rotary calciner 1225 rotates, the non-porous particles and the mixture travel along the length of the tube toward the exit. To prevent catalyst precursor from sticking to the walls of the calciner, a chain 1233 is used to scrape the interior wall as the tube rotates. A countercurrent gas flow of a gas, such as an inert gas or air, also travels along the length of the rotatable tube from inlet 1267 to outlet 1269. When the catalyst precursor and the non-porous particles reach the end of the rotatable tube, the catalyst precursor and non-porous particles flow into a sizer 1251. The sizer allows smaller particles (catalyst precursor) to fall through into a collection vessel 1257, while the non-porous particles are returned to the beginning of the rotary calciner. The sizer also agitates the non-porous particles, so that catalyst precursor attached to a non-porous particle will be separated off in the sizer, and not recycled into the rotary calciner.

Based on the nature of the solution and the type of heating/drying used, additional heating of the catalyst precursor may be desirable. If additional heating is desirable, the additional heating can be performed in an autoclave as described above, or the additional heating can be performed in a rotary calciner.

At some point during or after the heating process, the catalyst precursor can be mulled for uniformity. The catalyst precursor can be mulled in a dry state, such as in the form of a powder, or the catalyst precursor can be in a paste or other wet state. If it is desired to add a binder to the catalyst precursor, the binder can be added during the mulling step. Inert materials or diluents can also be added at this point to control the activity of the final catalyst.

After mulling, the catalyst precursor (plus any optional binder) is extruded. The extruded catalyst precursor can then be heated again, or the catalyst precursor can be sulfided to form catalyst.

In contrast to conventional hydroprocessing catalysts, which typically are comprised of a carrier impregnated with at least one Group VIII metal and at least one Group VIB metal, the catalysts of the present invention are bulk catalysts.

Without being bound by any particular theory, it is believed that the organic complexing agent and/or the resulting organic-compound based component plays a role in the unexpected high activity of the final catalysts. It is believed that the organic complexing agent and/or the resulting organic compound-based component either assists in stabilization of the metal particles and/or directly interacts with metal active sites and prevents the metal from agglomerating. In other words, the organic complexing agent and/or organic compound-based component enhances the dispersion of the active sites. When a catalyst precursor is formed with an amount of organic compound-based component that is less than the desired range, the activity of the resulting catalyst is lower.

A bulk powder catalyst precursor composition according to the invention, obtained after any of the above methods, can be directly formed into shapes suitable for a desired catalytic end use. Alternately, the bulk powder can be mixed with a conventional binder material then formed into the desired shapes. If a binder is used, it may be either introduced before or after decomposition (heating) of the mixture used to form the catalyst precursor. Examples of potential binders include Actigel clay, available from Active Minerals International of Hunt Valley, MD; Nyacol 2034 DI, available from Nyacol Nano Technologies, Inc. of Ashland, MA; or a Si-resin, such as Q-2230 available from Dow Corning. Other potential binders can include titania, zirconia, carbon, polyvinylacetate, methocel, ultrsil, Versal aluminas, and/or mixtures of any of the above. In still another embodiment, a binder precursor, such as silicic acid, Si acetate, or Al acetate, may be added to the mixture used for synthesizing the catalyst precursor.

A further step in the preparation of the catalysts described herein is a sulfidation step. Sulfidation is generally carried out by contacting the catalyst precursor composition with a sulfur containing compound, such as elemental sulfur, hydrogen sulfide or polysulfides. Sulfidation can also be carried out in the liquid phase utilizing a combination of a polysulfide, such as a dimethyl disulfide spiked hydrocarbon stream, and hydrogen. The sulfidation can be carried out subsequent to the preparation of the bulk catalyst composition but prior to the addition of a binder, if used.

If the catalyst composition is used in a fixed bed process, sulfidation is preferably carried out subsequent to the shaping step. Sulfidation may be carried out ex situ or in situ. For *ex situ* sulfidation, sulfidation is carried out in a separate reactor prior to loading the sulfided catalyst into the hydroprocessing unit. *In situ* sulfidation is preferred and for *in situ* sulfidation the sulfidation is carried out in the same reactor used for hydroprocessing.

In an embodiment, the sulfidation step can be a liquid sulfidation. In such an embodiment, the bulk catalyst can be sulfided by exposing the catalyst to a feedstock spiked with 1.36% by weight of dimethyl disulfide. Alternatively, the spiking level of dimethyl disulfide can be between 0.5 and 2.5% by weight. The catalyst can be exposed to the feed at a pressure of 500 psig (3.45 MPa) at a LHSV of 1.0 and hydrogen flow rate of 700 scf/B (125 m³/ m³). Preferably, the catalyst can be exposed to the feed for an initial period of time, such as 18 hours, at a temperature of 425°F (218°C), followed by a second period of time, such as 24 hours, at a temperature of 625°F
(329°C). In other embodiments, other conventional methods of sulfidation can be used.

In another embodiment involving liquid sulfidation, the catalyst can be sulfided using temperature and pressure conditions that are more severe than the expected eventual processing conditions. For example, if the sulfided catalyst will be used for processing a feedstock at a pressure of 150 psig (1.04 MPa), the sulfidation can be performed at a higher pressure to reduce the time needed to achieve sulfidation of the catalyst.

In various embodiments, the catalyst formed after sulfidation is believed to have at least in part a structure involving complexation or another interaction of metals by/with an organic compound-based component. The nature of the organic compound-based component in the sulfided catalyst may differ from the organic compound-based component in the catalyst precursor and the organic complexing agent used in the initial mixture to form the catalyst precursor. Note that in the Examples below, the carbon and sulfur species in the sulfided catalyst appear to oxidize and leave the catalyst at a similar time in Temperature Programmed Oxidation studies. One possible interpretation for these TPO studies is the presence of a complex (or some other type of interaction) between the organic compound-based component and metals in at least a portion of the catalyst structure.

In an embodiment, the carbon content of the catalyst after sulfidation is at least 10 wt% or at least 12 wt%. In another embodiment, the carbon content of the catalyst after sulfidation is 25 wt% or less or 20 wt% or less.

After sulfidation, at least a portion of the metal in the catalyst will be in a sulfided form. In particular, the Group VIB metal will form stacks of sulfided metal believed to have a MeS₂ stoichiometry, where Me represents the Group VIB metal. For example, if Mo is the Group VIB metal, stacks of MoS₂ will be formed. In catalysts formed according to the invention, the average stack height of the sulfided Group VIB metal will be from about 1.2 to about 2. In another embodiment, the average stack height will be at least 1.2, or at least 1.3, or at least 1.4, or at least 1.5. In still another embodiment, the average stack height will be 2.2 or less, or 2.1 or less, or 2.0 or less, or 1.9 or less. Without being bound by any particular theory, it is believed that a lower stack height corresponds indirectly to increased activity.

The catalyst compositions of the present invention are particularly suitable for hydroprocessing hydrocarbon feeds. Examples of hydroprocessing processes include hydrogenation of unsaturates, hydrodesulfurization, hydrodenitrogenation, hydrodearomatization and mild hydrocracking. Preferred are hydrodesulfurization and hydrodenitrogenation. Conventional hydroprocessing conditions include temperatures from about 250° to 450°C, hydrogen pressures of from 5 to 250 bar, liquid hourly space velocities of from 0.1 to 10 h⁻¹, and hydrogen treat gas rates of from 90 to 1780 m³/m³ (500 to 10000 SCF/B).

Feedstocks on which the present invention can be practiced are those petroleum feedstreams boiling in the distillate range. This boiling range will typically be from about 140°C to about 360°C and includes middle distillates, and light gas oil streams. Non-limiting examples of preferred distillate streams include diesel fuel, jet fuel and heating oils. The feedstocks can contain a substantial amount of nitrogen, e.g. at least 10 wppm nitrogen, and even greater than 1000 wppm, in the form of organic nitrogen compounds. The feedstocks can also contain a significant sulfur content, ranging from about 0.1 wt.% to 3 wt.%, or higher.

The hydroprocessing of the present invention also includes slurry and ebullating bed hydrotreating processes for the removal of sulfur and nitrogen compounds, and the hydrogenation of aromatic molecules present in light fossil fuels, such as petroleum mid-distillates, particularly light catalytic cycle cracked oils (LCCO). Distillates derived from petroleum, coal, bitumen, tar sands, or shale oil are likewise suitable feeds. Hydrotreating processes utilizing a slurry of dispersed catalysts in admixture with a hydrocarbon feed are generally known. For example, U.S. Pat. No. 4,557,821 to Lopez et al discloses hydrotreating a heavy oil employing a circulating slurry catalyst. Other patents disclosing slurry hydrotreating include U.S. Pat. Nos. 3,297,563; 2,912,375; and 2,700,015. The slurry hydroprocessing process of this invention can be used to treat various feeds including mid-distillates from fossil fuels such as light catalytic cycle cracking oils (LCCO).

Hydrogenation conditions include reactions in the temperature range of about 100°C to about 350°C and pressures from about five atmospheres (506 kPa) and 300 atmospheres (30,390 kPa) hydrogen, for example, 10 to 275 atmospheres (1,013 kPa to 27,579 kPa). In one embodiment the temperature is in the range including 180°C and 320°C and the pressure is in the range including 15,195 kPa and 20,260 kPa hydrogen. The hydrogen to feed volume ratio to the reactor under standard conditions (25°C, 1 atmosphere pressure) will typically range from about 20-200, for water-white resins 100-200.

Process conditions applicable for the use of the catalysts described herein may vary widely depending on the feedstock to be treated. Thus, as the boiling point of the feed increases, the severity of the conditions will also increase. The following table serves to illustrate typical conditions for a range of feeds.

| **FEED** | **TYPICAL BOILING RANGE °C** | **TEMP.°C** | **PRESS, BAR** | **SPACE VELOCITY V/V/HR** | **H₂ GAS RATE SCF/B** (m³/ m³) |
|---|---|---|---|---|---|
| naphtha | 25-210 | 100-370 | 10-60 | 0.5-10 | 100-2,000 (18-356) |
| diesel | 170-350 | 200-400 | 15-110 | 0.5-4 | 500-6,000 (89-1068) |
| heavy gas oil | 325-475 | 260-430 | 15-170 | 0.3-2 | 1000-6,000 (178-1068) |
| lube oil | 290-550 | 200-450 | 6-210 | 0.2-5 | 100-10,000 (18-1780) |
| residuum | 10-50%>575 | 340-450 | 65-1100 | 0.1-1 | 2,000-10,000 (356-1780) |

While the invention described herein shows enhanced activity for hydrodenitrogenation, most HDN catalysts will also show hydrodesulfurization (HDS) and hydrogenation activities. Consequently, the catalysts and processes described herein will be useful on feeds containing both nitrogen and sulfur, and will be particularly useful on feeds high in nitrogen.

The following examples will serve to illustrate, but not limit this invention. Examples 1 - 7 describe synthesis of various catalyst precursors and analysis of catalyst precursor properties and are presented for technical background purposes. Examples 8 - 10 describe commercial scale processes for producing such catalyst precursors Example 9 describes a process using a plow mixer (according to the invention), while Examples 8 and 10 describe processes using spray drying or a rotary calciner (not according to the invention).

### Example 1 - Catalyst Precursor Synthesis

Bulk CoMo catalysts were prepared by a controlled heating process. A 1 M Mo aqueous solution was prepared by dissolving the appropriate amount of ammonium heptamolybdate tetrahydrate (AHM) in distilled water. A 1 M Co aqueous solution was also prepared by dissolving the appropriate amount of cobalt acetate tetrahydrate in distilled water. A 4.5 M glyoxylic acid solution was prepared by a 1:1 dilution with distilled water of 50% glyoxylic acid aqueous solution.

A mixture was prepared by mixing together appropriate amounts of the above three solutions. The resulting solution had a reddish color. The ratio of Mo to Co in the solution was 2:1. Two bulk catalyst precursor mixtures were prepared. One catalyst precursor mixture had a molar ratio of glyoxylic acid/(Mo + Co) of 4.8, and is designated Catalyst Precursor A. A second catalyst precursor mixture designated Catalyst Precursor B was prepared having a molar ratio of glyoxylic acid/(Mo + Co) of 6. The catalyst precursor mixtures were heated at 55°C for about 4 hours, then at 120°C for about an additional 4 hours. The result for each catalyst precursor was a black viscous substance. The black viscous substance was then cooled to room temperature wherein it solidified. The solidified black substance was ground to a powder and placed in a tube furnace whereupon the temperature was ramped from about room temperature to about 325°C in one hour. The catalyst precursor compositions were then heated at a temperature of about 325°C in air for about 4 hours.

Samples of the two catalyst precursor powders were crushed into fines using an agate mortar and pestle. A portion of the precursor powders were sulfided to produce catalyst powder.

The BET surface area and carbon content were measured for the catalyst precursor compositions of Catalyst Precursor A and Catalyst Precursor B as well as for a CoMo catalyst precursor prepared similarly, but without the use of an organic acid (Comparative Catalyst 1). The results are shown in Table 2 below. X-ray diffraction showed that both samples of the bulk catalyst precursors of the present invention were amorphous in character, and do not exhibit the long range order typically observed in XRD when large particles of crystallized phases are present. The X-ray diffraction pattern for Comparative Catalyst 1 showed crystallized MoO₃ and CoMoO₄, which are typically regarded as undesirable catalyst precursors for hydrotreating processes. It is believed that residual carbon inside the catalyst precursors of the present invention interrupts the crystallization of CoMo oxides so that CoMo oxide crystals either are not present or are present as small crystals that introduce little or no crystalline character into XRD spectra.

**Table 2**

| Catalyst | BET SA (m²/g) | Carbon Content (wt.%) |
|---|---|---|
| Catalyst Precursor A CoMo-6-Gly | 15.6 | 23.8 |
| Catalyst Precursor B CoMo-4.8-Gly | <1 | 21.9 |
| Comparative Catalyst 1 CoMo Prepared Without Organic Acid | 20 | 0.22 |

It can be seen from Table 2 above that the bulk CoMo-6-Gly and CoMo-4.8-Gly catalyst precursors have relatively low surface areas. In particular, catalyst precursor CoMo-4.8 has a surface area less than 1 m²/g. After heating, both catalyst precursors of this invention contain substantial amounts of carbon of about 22 to 24 wt.%. The carbon content of the catalyst precursors of this invention is a function of the heating conditions the catalysts experienced, i.e., the time and the temperature of the heating profile, as well as the ratios of glyoxylic acid/(Mo + Co) metal. The carbon content in the bulk CoMo catalyst precursors influences the morphology of the CoMo in such precursors and the resulting hydrodesulfurization catalytic activities of the sulfided catalysts.

### Example 1B - Additional Catalyst Precursor Synthesis Examples

1 M solutions of ammonium heptamolybdate tetrahydrate and cobalt acetate tetrahydrate were used to form additional catalyst precursors. A solution containing 5.7 wt% AHM, 4.0 wt% Co Acetate, and 17.3 wt% glyoxylic acid was formed by mixing appropriate amounts of the 1 M Mo and Co solutions with a solution containing 25 wt% of glyoxylic acid. The molar ratio of R / (Co + Mo) was 4.8. After heating, the solution yield to solid was about 8.6%.

Separately, a solution containing 12.8 wt% AHM, 9.1 wt% Co Acetate, and 39.1 wt% glyoxylic acid was formed by mixing appropriate amounts of the 1 M Mo and Co solutions with a solution containing 50 wt% of glyoxylic acid. The molar ratio of R / (Co + Mo) was 4.8. After heating, the solution yield to solid was about 19.4%.

### Example 1C

This example is directed to the synthesis of bulk trimetallic NiCoMo. A bulk trimetallic NiCoMo catalyst was prepared by a controlled heating process according to the invention. 200 mg NiO, 200 mg Co(OH)₂ and 1 g H₂MoO₄ were each dissolved/suspended in water in separate containers. A 50 wt.% glyoxylic acid solution was added to each container such that the concentration of acid in each container was 15 wt.%. The Ni, Co, and Mo solutions were combined and 6 ml 30% H₂O₂ added to the combined solution. The sample was heated at 250C for 4 hours to yield the bulk trimetallic NiCoMo catalyst precursor.

### Example 2 - Catalyst Precursor Characterization

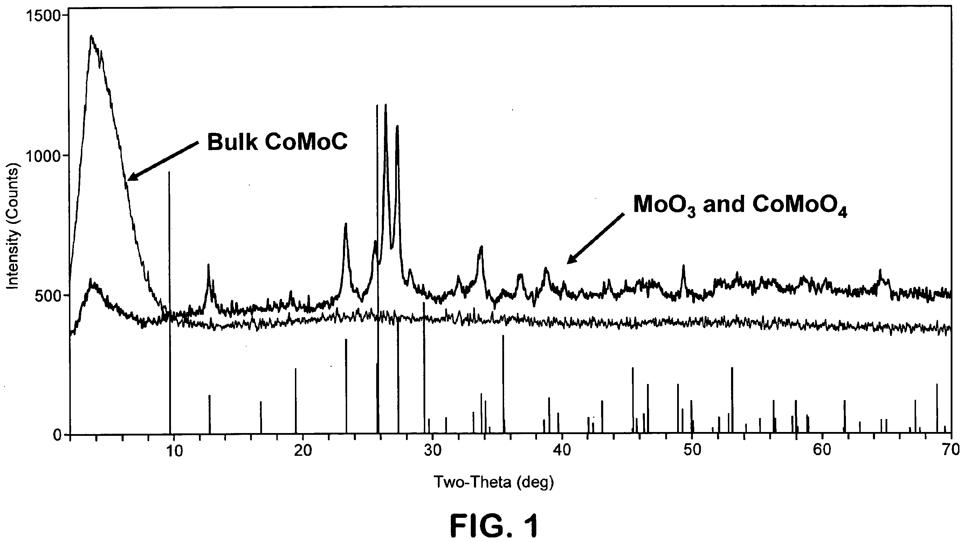

An X-ray Diffraction (XRD) analysis was performed on a CoMo based catalyst precursor synthesized with an organic compound.. The resulting XRD spectrum is shown in Figure 1. As shown in Figure 1, the CoMo based catalyst precursor has an amorphous XRD spectrum. It is believed that the organic compound-based component in the CoMo catalyst precursor interrupts the crystallization process, resulting in a CoMo catalyst precursor that does not have a detectable crystalline phase. In an alternative embodiment, a crystalline phase may be detectable in a catalyst precursor, but only as a portion of the catalyst precursor, resulting in XRD spectra with some crystalline character and some amorphous character. This is in contrast to the XRD spectrum of a bulk CoMo material (Comparative Catalyst 1) that was prepared without using an organic complexing agent, but that was otherwise prepared similarly to the catalyst precursors of the invention. The XRD spectrum for the bulk comparative CoMo material shows a crystalline morphology, including peaks that appear to represent MoO₃ and CoMoO₄.

### Example 3 - Temperature Programmed Oxidation of Catalyst Precursor

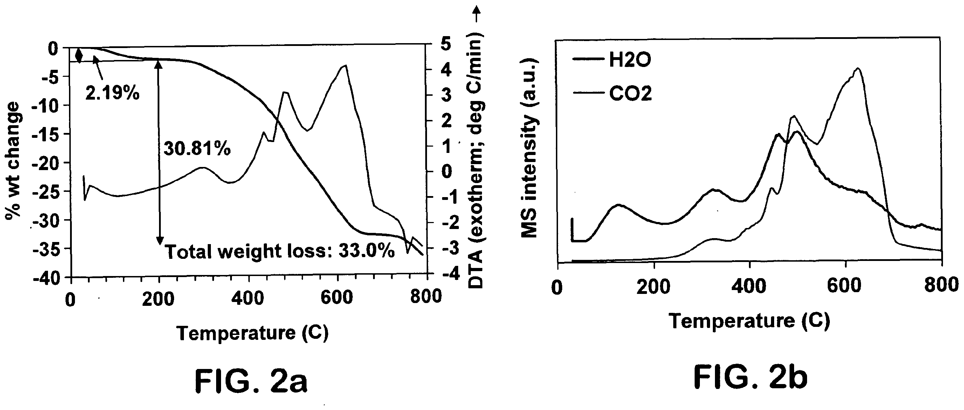

A temperature programmed oxidation (TPO) study was carried out to understand the nature of organic compound-based component of a catalyst precursor synthesized according to the procedure for Catalyst A in Example 1. Figure 2a shows that the catalyst precursor loses about 30 wt% of weight as the catalyst precursor is exposed to increasing temperatures up to 650°C. Figure 2b shows a mass spectrometry characterization of the products generated from the catalyst precursor sample as a function of temperature. The primary products generated during the TPO study were CO₂ and H₂O. Based on Figures 2a and 2b, it is believed that at 650°C all of the carbon has been removed from the catalyst precursor sample. The TPO study, in combination with the Temperature Programmed Reduction study described in Example 4, indicates that the organic compound-based component is composed of at least carbon, hydrogen, and oxygen.

### Example 4 - Temperature Programmed Reduction of Catalyst Precursor

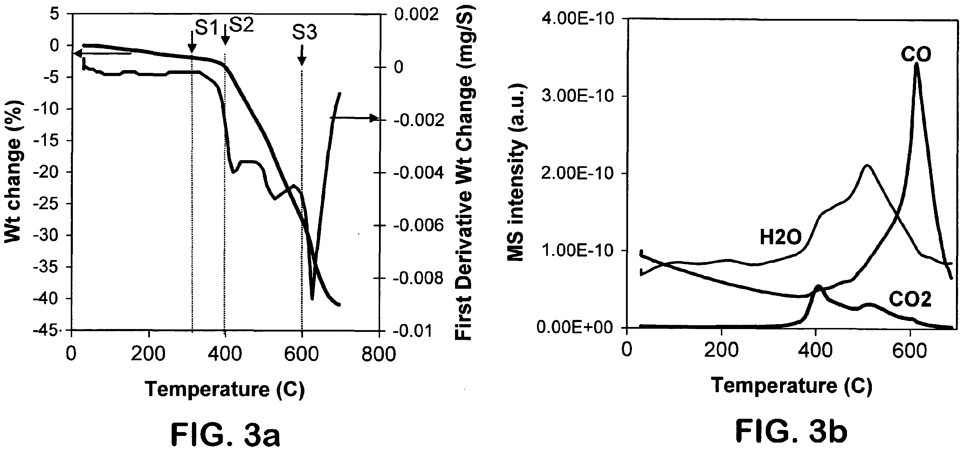

Figure 3 shows the results from a Temperature Programmed Reduction analysis (H₂-TPR) of a catalyst precursor synthesized according to the procedure for Catalyst Precursor A in Example 1. The H₂-TPR analysis was carried out in a 5% H2/He atmosphere, with a temperature change rate of 10°C per minute. The results of the H₂-TPR study are shown in Figures 3a and 3b. Figure 3a shows the total weight loss as measured by thermo-gravimetric analysis. By the time the sample reached 700°C, almost 40% of the weight of the precursor sample was removed. As shown in Figure 3b, this weight loss was in the form of H₂O, CO₂, and CO released from the precursor sample. The species released from the sample are believed to represent removal of the organic compound-based component and/or conversion of some metal oxides into lower oxidation states.

Note also that Figures 2a, 2b, 3a, and 3b indicate that removal of the organic compound-based component is minimal until a temperature near 400°C is achieved. Based on this, it is preferred that sulfidation of catalyst precursors, which also occurs in a reducing environment, should take place at a temperature of less than about 400°C, preferably less than about 350°C. For example, one preferred sulfidation temperature is about 325°C.

### Example 5 - Catalyst Characterization

A bulk catalyst precursor similar to Catalyst Precursor A was subjected to bulk sulfidation. A highly active material was obtained. Figure 4 shows X-ray Diffraction Pattern for the catalyst precursor as prepared, the corresponding catalyst after sulfidation, and a comparative spectrum of bulk MoS₂ made directly from AHM and H₂S. Figure 4 shows that the sulfided material is substantially amorphous and/or includes only small particles relative to the resolution of XRD, as compared to the distinctive diffraction peaks of the bulk MoS₂. This is consistent with TEM micrographs of the sulfided catalyst, which showed small crystal sizes. It is believed that these small crystals represent metal sulfides, possibly also including metal carbosulfides. In an alternative embodiment, at least a portion of a sulfided catalyst can have crystalline character that is detectable by XRD. In such an embodiment, the resulting XRD spectra may have some crystalline character and some amorphous character.

### Example 6 - Sulfidation of Catalyst Precursors

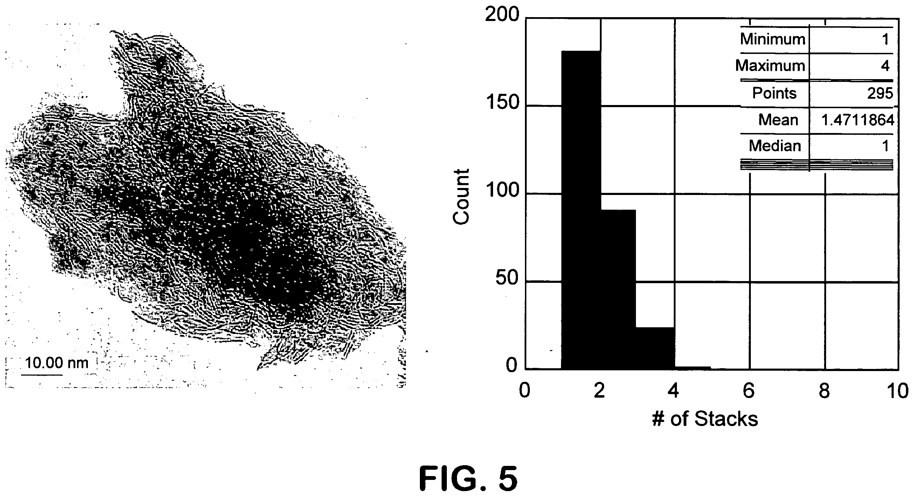

The procedure of Example 1 was followed to generate a catalyst precursor similar to Catalyst Precursor A. This catalyst precursor was then sulfided by a liquid phase sulfidation procedure. Figure 5 provides a TEM micrograph and stack height analysis for the resulting sulfided catalyst. The TEM data shows an average stack height for MoS₂ stacks in the sulfided catalyst of about 1.5.

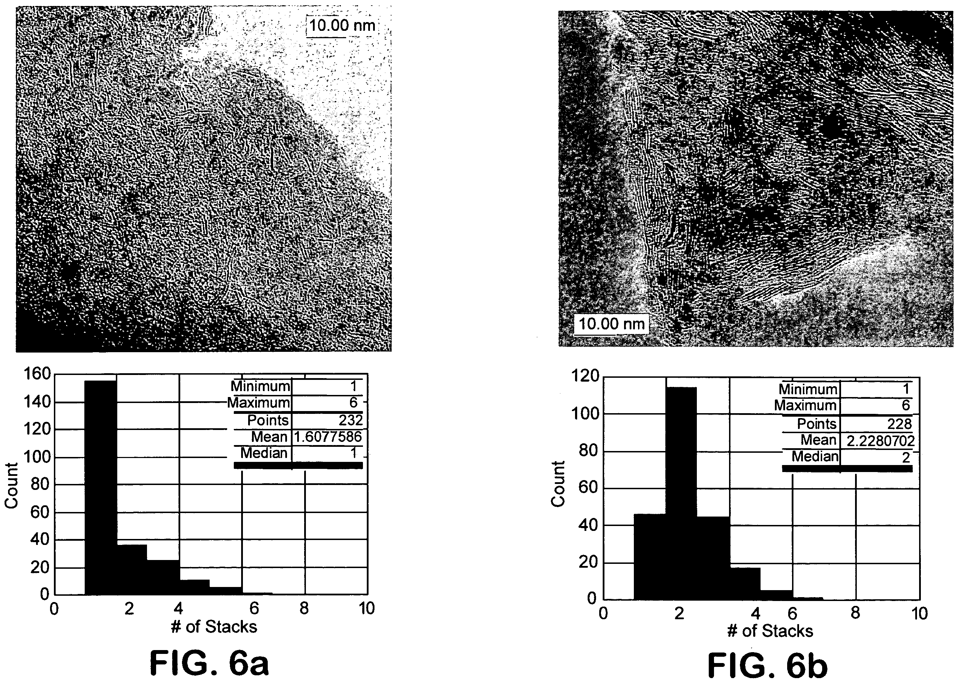

Figures 6a and 6b depict TEM data for two additional types of sulfided catalysts. The catalysts corresponding to Figures 6a and 6b were prepared using gas phase sulfidation processes to sulfide catalyst precursors prepared in a manner similar to Catalyst Precursor A. The catalyst corresponding to Figure 6a was prepared by sulfiding a catalyst precursor in 10% H₂S/H₂ at 232°C for 18 hours, followed by sulfiding at 321°C for an additional 12 hours. The catalyst corresponding to Figure 6b was sulfided in 10% H₂S/H₂ at 600°C for 4 hours.

The TEM data for the gas phase sulfided catalysts show an average measured stack height of 1.6 for the catalyst in Figure 6a and 2.2 for the catalyst in Figure 6b. Additionally, the gas phase sulfided catalysts shown in Figures 6a and 6b appear to be less homogenous than the sample shown in Figure 5. This effect is more noticeable for the catalyst in Figure 6b, which was sulfided at a higher temperature.

### Example 7 - Temperature Programmed Oxidation of Sulfided Catalyst

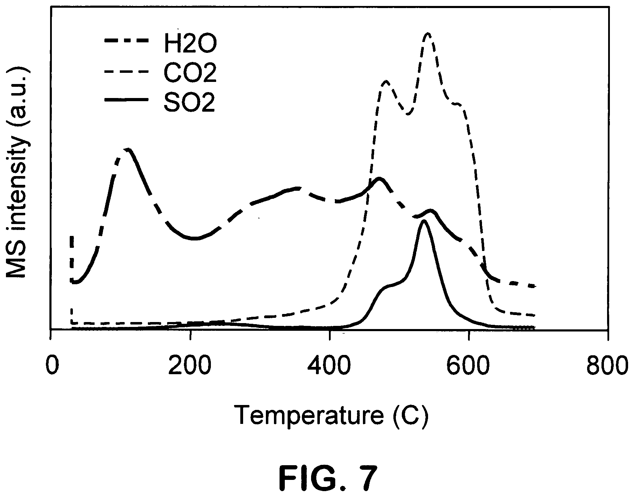

Figure 7 depicts results from a TPO study of a sulfided catalyst prepared by liquid phase sulfidation of a catalyst precursor similar to Catalyst Precursor A. Note that the CO₂ and SO₂ peaks are both in the temperature range of 400 - 600°C. Without being bound by any particular theory, in this temperature range it is believed that the bulk CoMoS₂ converts exothermically to Co oxide and Mo oxide with evolution of SO₂. The evolution of CO₂ in the same temperature window as SO₂ is consistent with the formation of a carbosulfide phase (such as CoMoSₓC_{y}) where the carbon is structurally part of the sulfide phase. Note also that H₂O is released at high temperature and may be associated either with remaining portions of the organic compound-based component or surface SH groups.

### Example 8 - Catalyst Precursor Synthesis by Spray Drying

Solutions of Co, Mo, and glyoxylic acid were prepared in accordance with Example 1. The ratio of glyoxylic acid to metals was selected to be either 3 or 4.8. The solids content (weight of Co compound, Mo compound, and glyoxylic acid versus total weight of aqueous solution) was either about 15 wt% or about 33 wt%. The solutions were used to feed a spray dryer apparatus. The spray dryer had a 31-inch (79 cm) chamber with a 34-inch (86 cm) cylindrical height and a 60° conical bottom. A 2-fluid nozzle atomization was used in all runs and the nozzle was set up in a bottom (fountain) spray orientation. The pressure at atomization was between 1 and 2 bars. Nitrogen or air was used as the gas in the drying chamber, the gas being heated to about 300°F (149°C) by an electric heater. The heated gas entered the chamber through the ceiling of the chamber and exited with the dried powder through the chamber bottom. The temperature of the exiting dry powder and gas was between about 110°F (43°C) and about 130°F (54°C). The dry powder and the gas were passed into a cyclone and the dry powder was collected at the bottom of the cyclone.

Under the conditions described above, the spray dryer produced catalyst precursor particles that contained about 5 - 5.5 wt% Co (measured as oxide) and about 15 - 17 wt% Mo. The bulk density of the catalyst precursor was from about 0.07 to about 0.1 g/cc.

In another group of runs, either an Actigel or a Nyacol binder (as described previously) was added to a solution prepared with a 33 wt% solids content. In these runs, the inlet temperature was about 300°F (149°C) and the outlet temperature was about 130°F (54°C). The addition of the binder increased the bulk density of the catalyst precursor to between 0.09 and 0.18 g/cc.

The catalyst precursor formed by the above methods was then either sulfided, or calcined and sulfided. The resulting sulfided catalyst was tested for desulfurization activity in comparison with a commercially available catalyst, KF-757™, available from Albemarle Catalyst Company. The comparison was conducted at 220 psig (1.52 MPa) and at a temperature of about 625°F (329°C). The sulfided catalyst formed from precursor prepared as described above exhibited activity varying from 110% to 200% of the activity of the KF-757. When a binder was included during synthesis of the catalyst precursor, the resulting sulfided catalyst provided an activity between 135 - 175% of the activity of KF-757.

### Example 9 - Catalyst Precursor Synthesis - Plow Mixer, Low Concentration

A 5 liter horizontal plow mixer vessel was equipped with a top mount charge opening and 4 internal rotating paddles. The vessel was jacketed hot water or steam was used for heating. The off-gas from the vessel was connected to a jacketed filter bag (3" by 6" cylinder) and thereafter passed through a condenser that operated on 80°F (27°C) tap water. A filter bag on top of the vessel was jacketed with the same hot water (or steam) in order to avoid condensation on the bag filter and consequent plugging.

To form a mixture, 0.2139 kg of ammonium heptamolybdate, 0.15 kg of cobalt acetate tetrahydrate, and 1.30 kg of 50% glyoxylic acid were added to the 5 liter horizontal plow mixer. About 2.3 kg of deionized water were then added, resulting in a total volume of about 3.785 liters. The internal paddles were set to an intial RPM of 190 to mix the raw materials and dissolve all the solids. The combination of reagents was mixed for 15 minutes. Crystals were not visible in the mixture after 1 - 2 minutes. After mixing for 15 minutes, all solids were dissolved and the solution was clear. The vacuum was then turned on, and the jacket temperature on the mixer was raised with hot water. The speed for the paddles was reduced to 120 RPM. The interior temperature appeared to lag behind the jacket temperature and lined out at a somewhat lower temperature due to the evaporative cooling. After most of the moisture was removed, the interior temperature approached the jacket temperature. To improve drying efficiency, the hot water in the jacket was replaced with steam for the final drying step. Thereafter, the unit was cooled down with tap water and discharged.

Condensate was quickly observed in a sight glass downstream of the chilled water trap. The rate of condensate collection only started to slow down after ∼ 2 hr of heating. Periodic samples indicated that the condensate was acidic (pH of about 3.5). During the drying step, the liquid became thick, like molasses, at which time the steam was used to heat the jacket of the mixer. At that point, the contents of the mixer expanded to fill about 100% of the mixer volume, and the vacuum was lost probably due to decomposition of the glyoxylic acid. Prior to the loss of vacuum, the pressure within the chamber was between about 15 and 50 mm Hg.

Upon opening the mixer, the dried material was formed into chunks and some stuck to the paddles of the mixer. However, upon cooling, the material became friable and broke up well into a gritty consistence that could be easily fed to a rotary calciner or a second horizontal mixer for calcination at a higher temperature. The following table and additional experimental details are provided to summarize the formation of the catalyst precursor of the present invention in the plow mixer.

**Table 2: Run variables and observables**

| Time | Condensate | Moisture @120C | Jacket | Bed | Cond pH | RPM | Vacuum |
|---|---|---|---|---|---|---|---|
| min | Gms | % | °F (°C) | °F (°C) | | | mmHg |
| 0 | | 79.3 | | | | | |
| 30 | 565 | | 133 (56) | 115 (46) | ∼3.5 | 120 | 48 |
| 60 | 555 | | 138 (59) | 116 (47) | | 120 | 48 |
| 90 | 520 | 51.5 | 137 (58) | 117 (47) | | 120 | 44 |
| 120 | 280 | | 140 (60) | 125 (52) | | 120 | 42 |
| 160 | 147 | 26.5 | 174 (79) | 166 (74) | | 120 | 22 |
| 210 | 17 | 6.9 | 299 (148) | 276 (136) | | 120 | 18 |

### Overall mass balance

Charged to mixer : 214gm AHM + 150gm Co-acetate + 1,300gm 50% GlA +2,310gm DI = 3,974 gm total
Solids retrieved = 515gm
Condensate collected = 2084 gm (clear liquid, colorless)
Loss = 1375 gm (Combination of decomposition products and vacuum pot evaporation losses)

After removal from the plow mixer, the dried powder was calcined at 617°F in nitrogen. The composition of the calcined CoMo-C catalyst precursor was 21.7 wt% carbon, 3.4 wt% nitrogen, 15.1 wt% cobalt, and 53.5 wt% molybdenum.

### Example 10 - Catalyst Precursor Synthesis - Rotary Calciner

A rotary calciner similar to the rotary calciner depicted in Figure 12 was used to prepare catalyst precursor. The catalyst precursor from the calciner was then sulfided and compared for reactivity with both a sulfided catalyst of similar composition made using an autoclave, and with a commercially available reference catalyst.

The catalyst was formed by preparing a solution composed of cobalt, molybdenum, and glyoxylic acid. The solution was prepared in a manner similar to the method described in Example 1, with a ratio of glyoxylic acid to total metals (Co + Mo) of 4.8. The solution was then used to form catalyst precursor in two ways. About 30 ml of the CoMo-glyoxylic acid solution was placed in a quartz tumbler. Lightweight stones were added to fill the length of the tumbler. The quartz tumbler was then placed inside a tube furnace and rotated at about 4 RPM. The furnace was first heated to about 100°C, in about 1 hour, under a 1250 sccm flow of nitrogen. The furnace temperature was then held at 100°C for about 1 hour. Next, the furnace temperature was quickly ramped to 375°C, and then held at 375°C for 1 hour. The furnace was then allowed to cool to room temperature in flowing nitrogen.

Catalyst precursor was also formed by heating according to the method in Example 1 by heating in an oven at 325°C in a nitrogen atmosphere. The catalyst precursor from both methods was then sulfided prior to testing for reactivity.

For reactivity testing, a KF-757™ reference catalyst (available from Albemarle Catalyst Company) was used to process a hydrocarbon feed, in addition to the two catalyst formed from the CoMo-glyoxylic acid solution. The hydrocarbon feed was a blend of hydrotreated virgin and cracked distillates fractionated to a boiling range of between 550°F (288°C) and 700°F (371°C). The hydrocarbon feed contained about 500 ppm sulfur and about 380 ppm nitrogen. Using the KF-757 value as a reference, the catalyst prepared in the oven under a nitrogen atmosphere showed roughly twice the hydrodesulfurization activity of KF-757, while the catalyst prepared in the rotary calciner showed roughly 2.5 times the hydrodesulfurization activity of KF-757.

## Claims

1. A method for preparing a bulk bimetallic Group VIII/Group VIB catalyst precursor, which method comprises:
i) mixing at least one Group VIII metal reagent, at least one Group VIB metal reagent, and an organic complexing agent in the form of an organic acid for an effective amount of time so that no solids are present;
ii) heating the mixture at a pressure less than 1 atmosphere under effective conditions to dry the mixture; and
iii) calcining the heated mixture to form catalyst precursor,
wherein mixing step (i) and heating step (ii) are performed in a plow mixer or in a conical vacuum dryer.

2. The method of claim 1, wherein calcining the heated mixture includes transferring the heated mixture to a rotary calciner prior to calcination.

3. The method of claim 1, further comprising mulling the catalyst precursor composition.

4. The method of claim 1, further comprising extruding the mulled catalyst precursor composition.

5. The method of claim 1, wherein the catalyst precursor composition is sulfided at sulfiding conditions to produce a catalyst.

6. The method of claim 1, wherein the Group VIII metal is cobalt or nickel and the Group VIB metal molybdenum or tungsten.

7. The method of claim 1, wherein the organic complexing agent is an organic acid that contains a -COOH functional group and at least one additional functional group selected from carboxylic acid -COOH, hydroximate acid -NOH-C=O, hydroxo -OH, keto - C=O, amine -NH2, Amide: -CO-NH2, imine : -CNOH, epoxy: =COC=, or thiol: -SH.

8. The method of claim 1, wherein the organic acid is pyruvic acid, levulinic acid, keto-gulonic acid, 4-acetylbutyric acid, 1,3-acetonedicarboxylic acid, ethyl glyoxylate, glycolic acid, glycine, oxamic acid, glyoxylic acid 2-oxime, ethylenediaminetetraacetic acid, nitrilotriacetic acid, N-methylaminodiacetic acid, iminodiacetic acid, diglycolic acid, malic acid, gluconic acid, citric acid, or a combination thereof.

9. The method of claim 1, wherein the organic acid is selected from the group consisting of glyoxylic acid, oxalic acid, 2-ketogulonic acid, alpha-ketoglutartic acid, 2-ketobutyric acid, pyruvic acid, keto-gluonic, glycolic acid, and oxalacetic acid.

## Patentansprüche

1. Verfahren zur Herstellung eines massiven Bimetall-Gruppe VIII/Gruppe VIB-Katalysator-Vorläufers, wobei das Verfahren umfasst:
i) Mischen von mindestens einem Gruppe VIII-Metallreagenz, mindestens einem Gruppe VIB-Metallreagenz und einem organischen Komplexbildner in Form einer organischen Säure über eine wirksame Zeitdauer, so dass keine Feststoffe vorhanden sind;
ii) Erwärmen der Mischung bei einem Druck von weniger als 1 Atmosphäre unter wirksamen Bedingungen, die Mischung zu trocknen; und
iii) Kalzinieren der erwärmten Mischung zur Bildung eines Katalysatorvorläufers,
wobei Mischschritt (i) und Erwärmungsschritt (ii) in einem Pflugmischer oder in einem konischen Vakuumtrockner stattfinden.

2. Verfahren nach Anspruch 1, wobei das Kalzinieren der erwärmten Mischung das Übertragen der erwärmten Mischung in einen Drehkalzinator vor dem Kalzinieren beinhaltet.

3. Verfahren nach Anspruch 1, ferner umfassend das Mahlen der Katalysatorvorläuferzusammensetzung.

4. Verfahren nach Anspruch 1, ferner umfassend das Extrudieren der gemahlenen Katalysatorvorläuferzusammensetzung.

5. Verfahren nach Anspruch 1, wobei Katalysatorvorläuferzusammensetzung unter Sulfidierungsbedingungen sulfidiert wird, um einen Katalysator herzustellen.

6. Verfahren nach Anspruch 1, wobei das Metall der Gruppe VIII Kobalt oder Nickel und das Metall der Gruppe VIB Molybdän oder Wolfram ist.

7. Verfahren nach Anspruch 1, wobei der organische Komplexbildner eine organische Säure ist, die eine -COOHfunktionelle Gruppe und mindestens eine zusätzliche funktionelle Gruppe enthält, ausgewählt aus Carbonsäure-COOH, Hydroximatsäure -NOH-C=O, Hydroxy -OH, Keto -C=O, Amin -NH₂, Amid: -CO-NH₂, Imin: -CNOH, Epoxy: =COC= oder Thiol: -SH.

8. Verfahren nach Anspruch 1, wobei die organische Säure Brenztraubensäure, Levulinsäure, Ketogulonsäure, 4-Acetylbuttersäure, 1,3-Acetondicarbonsäure, Ethylglyoxylat, Glycolsäure, Glycin, Oxaminsäure, Glyoxylsäure-2-oxim, Ethylendiamintetraessigsäure, Nitrilotriessigsäure, N-Methylaminodiessigsäure, Iminodiessigsäure, Diglykolsäure, Äpfelsäure, Gluconsäure, Zitronensäure oder eine Kombination davon ist.

9. Verfahren nach Anspruch 1, wobei die organische Säure ausgewählt ist aus der Gruppe bestehend aus Glyoxylsäure, Oxalsäure, 2-Ketogulonsäure, α-Ketoglutarsäure, 2-Ketobuttersäure, Pyruvinsäure, Ketoglukonsäure, Glycolsäure Säure und Oxalessigsäure.

## Revendications

1. Procédé de préparation d'un précurseur de catalyseur bimétallique du groupe VIII/groupe VIB en vrac, le procédé comprenant :
i) le mélange d'au moins un métal réactif du groupe VIII, d'au moins un métal réactif du groupe VIB, et d'un agent complexant organique sous la forme d'un acide organique pendant une durée efficace de sorte qu'aucun solide ne soit présent ;
ii) le chauffage du mélange à une pression inférieure à 1 atmosphère dans des conditions efficaces pour sécher le mélange ; et
iii) la calcination du mélange chauffé pour former un précurseur de catalyseur,
dans lequel l'étape de mélange (i) et l'étape de chauffage (ii) sont conduites dans un mélangeur à socs ou dans un séchoir sous vide conique.

2. Procédé selon la revendication 1, dans lequel la calcination du mélange chauffé comprend le transfert du mélange chauffé dans un calcinateur rotatif avant calcination.

3. Procédé selon la revendication 1, comprenant en outre l'humidification de la composition de précurseur de catalyseur.

4. Procédé selon la revendication 1, comprenant en outre l'extrusion de la composition de précurseur de catalyseur humidifiée.

5. Procédé selon la revendication 1, dans lequel la composition de précurseur de catalyseur est sulfurée dans des conditions de sulfuration pour produire un catalyseur.

6. Procédé selon la revendication 1, dans lequel le métal du groupe VIII est le cobalt ou le nickel et le métal du groupe VIB est le molybdène ou le tungstène.

7. Procédé selon la revendication 1, dans lequel l'agent complexant organique est un acide organique qui contient un groupe fonctionnel -COOH et au moins un groupe fonctionnel supplémentaire choisi parmi un acide carboxylique -COOH, un hydroxymate d'acide -NOH-C=O, hydroxo -OH, céto -C=O, amine -NH₂, amide : -CO-NH₂, imine : -CNOH, époxy : =COC=, ou thiol : -SH.

8. Procédé selon la revendication 1, dans lequel l'acide organique est l'acide pyruvique, l'acide lévulinique, l'acide cétogulonique, l'acide 4-acétylbutyrique, l'acide 1,3-acétonedicarboxylique, le glyoxylate d'éthyle, l'acide glycolique, la glycine, l'acide oxamique, le 2-oxime d'acide glyoxylique, l'acide éthylènediaminetétraacétique, l'acide nitrilotriacétique, l'acide N-méthylaminodiacétique, l'acide iminodiacétique, l'acide diglycolique, l'acide malique, l'acide gluconique, l'acide citrique, ou une combinaison de ceux-ci.

9. Procédé selon la revendication 1, dans lequel l'acide organique est choisi dans le groupe constitué de l'acide glyoxylique, l'acide oxalique, l'acide 2-cétogulonique, l'acide alpha-cétoglutarique, l'acide 2-cétobutyrique, l'acide pyruvique, l'acide cétogluconique, l'acide glycolique et l'acide oxalacétique.
